(19) **Europäisches Patentamt**
**European Patent Office**
**Office européen des brevets**

(11) **EP 2 685 535 A1**

(12) **EUROPEAN PATENT APPLICATION**
published in accordance with Art. 153(4) EPC

(43) Date of publication:
**15.01.2014 Bulletin 2014/03**

(51) Int Cl.:
**H01M 4/587** *(2010.01)*  **C01B 31/02** *(2006.01)*

(21) Application number: **12755067.1**

(22) Date of filing: **12.03.2012**

(86) International application number:
**PCT/JP2012/056232**

(87) International publication number:
**WO 2012/121407 (13.09.2012 Gazette 2012/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.03.2011 JP 2011052441**

(71) Applicant: **Kureha Corporation**
**Chuo-ku**
**Tokyo 103-8552 (JP)**

(72) Inventors:
• **IMAJI Makoto**
  **Tokyo 103-8552 (JP)**
• **TADA Yasuhiro**
  **Tokyo 103-8552 (JP)**
• **SONOBE Naohiro**
  **Tokyo 103-8552 (JP)**

(74) Representative: **HOFFMANN EITLE**
**Patent- und Rechtsanwälte**
**Arabellastrasse 4**
**81925 München (DE)**

(54) **CARBONACEOUS MATERIAL FOR NON-AQUEOUS ELECTROLYTE SECONDARY BATTERY NEGATIVE ELECTRODE**

(57)    The object of the present invention is to provide a carbonaceous material for a negative electrode of non-aqueous electrolyte secondary batteries having a great charge-discharge capacity, high charge-discharge efficiency, and an excellent charge-discharge cycle characteristic.

The object can be solved by a carbonaceous material for a negative electrode of non-aqueous electrolyte secondary batteries, characterized in that an average (002) interlayer spacing d002 determined by X-ray diffractometry is 0.365 to 0.400 nm, a specific surface area determined by a BET method is 1 to 7 $m^2$/g, an average diameter is 5 to 25$\mu$m, a value of $(D_{90}-D_{10})/D_{50}$ is 1.05 or less, and an exothermic peak does not emerge at a temperature range of 620°C or less in differential thermal analysis measured in an air atmosphere.

Figure 1

## Description

### TECHNICAL FIELD

The present invention relates to a carbonaceous material for a negative electrode of non-aqueous electrolyte secondary batteries, and a process for manufacturing the same. According to the present invention, a carbonaceous material for a negative electrode of non-aqueous electrolyte secondary batteries having a great charge-discharge capacity, a high charge-discharge efficiency, and an excellent charge-discharge cycle characteristic can be provided.

### BACKGROUND ART

A non-aqueous electrolyte secondary battery such as a lithium-ion secondary battery is small and light. Therefore, these days, it is expected that the non-aqueous electrolyte secondary battery is widely used in an automotive application such as electric vehicles (EV) driven only by motors or hybrid-type electric vehicles (HEV) with a combination of an internal combustion engine and batteries. In particular, in the electric vehicles, it is necessary to increase a mileage per charge so as to come close to one of gasoline engine vehicles. Therefore, more high-energy batteries are desired.
At present, as negative electrode materials of a lithium-ion secondary battery, carbon materials are used. That is, graphite, graphitizable carbon material having developed graphite structures, or non-graphitizable carbon material are mainly used. Because the graphite has a theoretical capacity (372Ah/kg), it is necessary to increase electrode density or further improve charge-discharge efficiency, in order to increase energy density. Further, in the automotive application, the battery is required to achieve life performance of ten years or more, in order to use it for a prolonged period. However, a graphite crystal of the graphite or the graphitizable carbon material having developed graphite structures is easily destroyed by repetition of doping and dedoping the lithium. Therefore, the secondary batteries using such carbon materials are unsuitable for the automotive application, due to poor repetition performance of the charge-discharge thereof.
On the other hand, non-graphitizable carbon material causes little expansion and constriction at the time of the doping and dedoping of lithium to exhibit a high cycle durability so that it is suitable for use in the automotive application. Therefore, in the lithium-ion secondary battery for the automotive application, it is expected to additionally achieve high-energy density thereof by means of non-graphitizable carbon material.

### CITATION LIST

### PATENT LITERATURE

[Patent literature 1] Japanese Unexamined Patent Publication (Kokai) No.8-115723
[Patent literature 2] Japanese Unexamined Patent Publication (Kokai) No.2009-840099

### SUMMARY OF INVENTION

### TECHNICAL PROBLEM

Accordingly, the object of the present invention is to provide a carbonaceous material for a negative electrode of non-aqueous electrolyte secondary batteries having a great charge-discharge capacity, a high charge-discharge efficiency, and an excellent charge-discharge cycle characteristic. Further, the object of the present invention is to provide a carbonaceous material most suitable for the negative electrode of a non-aqueous electrolyte secondary battery which has a high rate performance, and can be rapidly charged and discharged.

### SOLUTION TO PROBLEM

It is disclosed that a non-graphitizable carbon material for a negative electrode of lithium-ion secondary batteries is manufactured as follows: A carbon source such as a phenol resin or an oxidized petroleum pitch is preliminarily calcined (first heat treatment), and the resulting carbon precursor obtained by the preliminary calcination is pulverized. Then, the pulverized carbon precursor is calcined (second heat treatment) (Patent literature 1 and Patent literature 2). For example, Patent literature 1 discloses that petroleum pitch or coal pitch is used as a carbon source, the pitch is oxidized at 120 °C to 300 °C in a gas containing oxygen, the oxidized pitch is preliminarily calcined at 350 °C to 700 °C, and the pre-calcined pitch is calcined at 900 °C to 1350 °C. Further, Patent literature 2 discloses that phenol resin is used as a carbon source, the first heat treatment is performed at 400 °C to 800 °C, the second heat treatment is performed at 800 °C to 1400 °C, and the phenol resin can be pulverized by a ball mill, a jet mill, a dry-type bead mill, or the like. Preferably, it is pulverized by a ball mill.

In the preparation of the non-graphitizable carbon material, the present inventors obtained a non-graphitizable carbon material prepared by pulverizing a pre-calcined carbon source with a ball mill or a rod mill. However, the resulting non-graphitizable carbon material prepared by the ball mill or the rod mill contains particles with a wider particle diameter. Thus, when a thin negative electrode of a lithium-ion secondary battery was prepared using the resulting non-graphitizable carbon material, a surface of the negative electrode was not flat and smooth, due to the particles having a wider particle diameter. Therefore, the particles having a wider particle diameter may lead to difficulty with the preparation of the negative electrode. The particles with a wider particle diameter can be reduced by pulverizing the pre-calcined carbon source by the ball mill or the rod mill for a prolonged period of time. However, fine particles with a smaller particle diameter are increased through prolonged pulverization. In a lithium-ion  secondary battery prepared using a non-graphitizable carbon material containing a large amount of fine particles, a battery performance thereof is reduced by increasing an irreversible capacity.

The present inventors have conducted intensive studies into improving battery performance; found that a jet mill (a mill using a high-pressure air, and the like) is used instead of the ball mill or the rod mill, and as a result, a non-graphitizable carbon material without the particles having a wider particle diameter and fine particles can be obtained. That is, the present inventors found that the non-graphitizable carbon material having a sharp range of particle size distribution can be obtained by the jet mill. Further, the inventors found that circularity of the non-graphitizable carbon material particle can be increased using the jet mill. That is, an amount of the non-graphitizable carbon material packed into a negative electrode can be increased by the increase of circularity, and thus, it becomes possible to increase a charge-discharge capacity of the secondary battery.

However, when the non-graphitizable carbon material obtained by the jet mill is used as a negative electrode, the resulting lithium-ion secondary battery sometimes exhibits a low discharge capacity and a high irreversible capacity, and therefore an excellent battery performance cannot often be obtained. The present inventors have conducted intensive studies on the reasons of the problems, and as a result, found that when the carbon precursor is pulverized by the jet mill, metals on the inside wall of the jet mill machine are removed. Thus, the fine metallic pieces are mixed in the resulting non-graphitizable carbon material.

The present inventors have further conducted intensive studies into preventing a contamination of the non-graphitizable carbon material by fine metallic pieces, and as a result, found that the contamination of the resulting non-graphitizable carbon material by fine metallic pieces can be prevented by adjusting a temperature of preliminary calcination to 610°C or less, and decreasing a hardness of  the carbon precursor of non-graphitizable carbon material. When the carbon source is preliminarily calcined at high temperature, the hardness of the carbon precursor of non-graphitizable carbon material is increased. Therefore, the carbon precursor is violently pulverized, and thus the metals on the inside wall of the jet mill machine are removed. In this regard, the hardness of the carbon precursor can be decreased by preliminary calcining at a low temperature, and thus the metal spalling of the inside wall of the jet mill machine can be prevented. Further, the load on the jet mill machine can be reduced.

Hitherto, the jet mill was not used in the manufacture of non-graphitizable carbon material for a negative electrode of lithium-ion secondary batteries. Further, it is not known that a carbonaceous material having a sharp range of particle size distribution and an improved circularity can be obtained with the jet mill. Further, it is not known that there is a problem in that the contamination of non-graphitizable carbon material by fine metallic pieces occurs by use of the jet mill. The present inventors have conducted intensive studies into solving problems on the improvement of battery performance and the contamination by fine metallic pieces. As a result, the present inventors found that the carbonaceous material for a negative electrode of non-aqueous electrolyte secondary batteries, having high charge-discharge capacity, high charge-discharge efficiency, and excellent charge-discharge cycle characteristics, can be obtained by pre-calcining a carbon source at 610°C or less, pulverizing the resulting carbon precursor of non-graphitizable carbon material with the jet mill, and calcining the pulverized carbon precursor.

The present invention is based on the above findings.

Accordingly, the present invention relates to a carbonaceous material for a negative electrode of non-aqueous electrolyte secondary batteries, characterized in that an average (002) interlayer spacing d002 determined by X-ray diffractometry is 0.365 to 0.400 nm, a specific surface area determined by a BET method is 1 to 7 m$^2$/g, an  average diameter is 5 to 25$\mu$m, a value of $(D_{90}-D_{10})/D_{50}$ is 1.05 or less, and an exothermic peak does not emerge at a temperature range of 620°C or less in differential thermal analysis measured in an air atmosphere.

According to a preferable embodiment of the carbonaceous material for a negative electrode of non-aqueous electrolyte secondary batteries of the present invention, circularity is 0.925 or more.

According to a preferable embodiment of the carbonaceous material for a negative electrode of non-aqueous electrolyte secondary batteries of the present invention, a carbon source of the carbonaceous material is a petroleum pitch or a coal pitch.

Further, the present invention relates to a method for preparing a carbonaceous material for a negative electrode of non-aqueous electrolyte secondary batteries comprising the steps of:(1) preliminarily calcining a carbon source at 610°C or less to obtain a carbon precursor, (2) pulverizing the carbon precursor by a jet mill to obtain a pulverized carbon precursor, and (3) mainly calcining the fine particles of pulverized carbon precursor at 800°C or more to obtain the carbonaceous material.

According to a preferable embodiment of the method for preparing a carbonaceous material for a negative electrode of non-aqueous electrolyte secondary batteries of the present invention, the carbon source is a petroleum pitch or a coal pitch, and the method comprises a step of oxidizing the carbon source at 50 to 400°C under an oxidation gas atmosphere, before the preliminary calcination step.

ADVANTAGEOUS EFFECTS OF INVENTION

The carbonaceous material for a negative electrode of non-aqueous electrolyte secondary batteries of the present invention is non-graphitizable carbon material, and therefore, a non-aqueous electrolyte secondary battery, having a high discharge capacity to charge capacity, a low irreversible capacity to charge capacity, and a high charge-discharge efficiency, can be obtained by use of the carbonaceous material of the present invention as a negative electrode of non-aqueous electrolyte secondary batteries (for example, lithium-ion secondary batteries). Further, the carbonaceous material for a negative electrode of non-aqueous electrolyte secondary batteries of the present invention has a sharp range of particle size distribution. In particular, the particle size distribution of the large particles having a diameter of $D_{50}$ or more is sharp. Therefore, a thickness of the negative electrode can be reduced by use of the carbonaceous material for a negative electrode of non-aqueous electrolyte secondary batteries of the present invention. As a result, the non-aqueous electrolyte secondary battery, which has a high rate performance, and can be rapidly charged and discharged, is obtainable. Further, the carbonaceous material for a negative electrode of non-aqueous electrolyte secondary batteries of the present invention has a high circularity, and therefore, a charge-discharge capacity of the negative electrode per a unit volume can be increased, in the non-aqueous electrolyte secondary battery.

BRIEF DESCRIPTION OF THE DRAWINGS

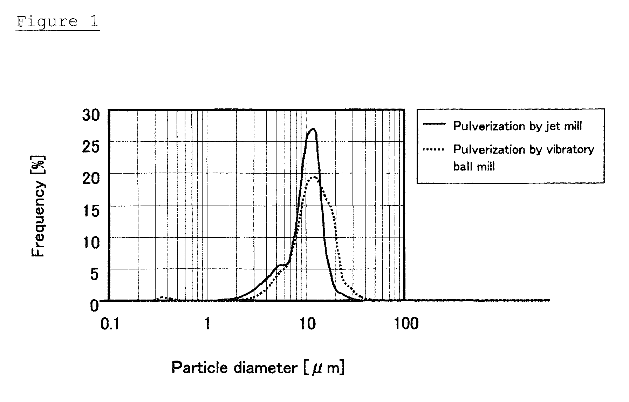

FIG. 1 is a graph showing the particle size distribution of fine particles of carbon precursor pulverized by a jet mill (continuous line) or a vibratory ball mill (broken line).

[DESCRIPTION OF EMBODIMENTS]

Carbonaceous material for a negative electrode of non-aqueous electrolyte secondary batteries

The carbonaceous material for a negative electrode of non-aqueous electrolyte secondary batteries of the present invention has an average (002) interlayer spacing d002 determined by X-ray diffractometry of 0.365 to 0.400 nm, a specific surface area determined by a BET method of 1 to 7 $m^2/g$, an average diameter of 5 to 25 $\mu$m, and a value of $(D_{90}-D_{10})/D_{50}$ of 1.05 or less, and an exothermic peak does not emerge at a temperature range of 620°C or less in differential thermal analysis measured under an air atmosphere.

The carbonaceous material of the present invention is a non-graphitizable carbon, carbonaceous material, and therefore the average (002) interlayer spacing d002 determined by X-ray diffractometry thereof is 0.365 to 0.400 nm.

A graphite or a graphitizable carbon material having developed graphite structures has a dense crystal structure of graphite. For example, in the lithium-ion secondary battery, the distance between graphite layers expands by about 10 %, and thus the crystal structures of graphite may be easily destroyed. On the other hand, a crystal structure of graphite does not fully develop in the non-graphitizable carbon, carbonaceous material, and therefore, lithium can be doped into microscopic voids in a disordered crystal structure thereof. Therefore, expansion and constriction of the particles by charge-discharge is little, and thus, there is almost no breaking of particle structure by repetition of charge-discharge, an increase of contact resistance between particles in an electrode, or a deformation of an electrode plate. Therefore, the negative electrode using the non-graphitizable carbon material has an excellent durability to doping and dedoping (reactions) of lithium. In other words, in the non-graphitizable carbon material, the expansion and constriction of charge-discharge is little, and thus the non-graphitizable carbon material has an excellent repetition performance, i.e. durability, compared to the graphite or the graphitizable carbon material.

The carbonaceous material of the present invention does not have an exothermic peak at a temperature range of 620°C or less in differential thermal analysis. If the carbonaceous material is contaminated by metal pieces (for example Fe), the exothermic peak emerges at a temperature range of 620°C or less in differential thermal analysis. If the carbonaceous material contaminated by metal pieces is used as the negative electrode of a non-aqueous electrolyte secondary battery, the battery performance thereof becomes poor. In particular, a reduction of discharge capacity i.e. an increase of irreversible capacity is observed, and thus charge-discharge efficiency is decreased. Further, when the carbonaceous material is contaminated by metal pieces (for example Fe), the non-aqueous electrolyte secondary battery using the same is at risk of a voltage reduction or internal short-circuit, and thus the carbonaceous material is undesirable from a safety standpoint.

It is presumed that the metal pieces are mixed in the carbonaceous material from stainless steel of the inside wall of the jet mill. As mentioned below, the contamination by metal pieces is solved by preliminarily calcining a carbon source at 610°C or less in the manufacturing of the non-graphitizable carbon material.

The carbonaceous material of the present invention has a specific surface area determined by a BET method of 1 to 7 $m^2/g$.

When a carbonaceous material having a specific surface area determined by a BET method of more than 7$m^2/g$ is used as a negative electrode for a non-aqueous electrolyte secondary battery, the decomposition of an electrolyte solution is increased, and is then a cause for increase of the irreversible capacity. Thus, the battery performance is lowered. On the other hand, when a carbonaceous material having a specific surface area determined by a BET method of less than 1 $m^2/g$ is used as a negative electrode for a non-aqueous electrolyte secondary battery, the reaction area with an electrolyte solution is decreased, and thus, there is a possibility that input/output performances are lowered.

The average diameter ($D_{50}$) of the carbonaceous material of the present invention is 5 to 25$\mu$m, preferably 7 to 23$\mu$m. In order to improve an output performance of a non-aqueous electrolyte secondary battery, it is important that an active substance layer of the electrode becomes thin, whereby the electrode resistance is reduced. In addition, when the average diameter is 25$\mu$m or less, a length of lithium diffusion in the particle becomes short. Therefore, the carbonaceous material, having an average diameter of 25$\mu$m or less, is preferable in rapid charge.

A value obtained by the formula ($D_{90}$-$D_{10}$)/$D_{50}$ of the carbonaceous material of the present invention is 1.05 or less, preferably 1.00 or less, more preferably 0.95 or less, most preferably 0.90 or less. $D_{10}$ means a particle diameter giving a cumulative volume of 10 % in a cumulative (integrated) volume of particles. $D_{50}$ means an average particle diameter, i.e. a particle diameter giving a cumulative volume of 50 %. $D_{90}$ means a particle diameter giving a cumulative volume of 90 % in a cumulative (integrated) volume of particles. When the value obtained by the formula ($D_{90}$-$D_{10}$)/$D_{50}$ is more than 1.0, the carbonaceous material may contain a large amount of the fine particles and/or the carbonaceous material may contain a large amount of particles having a wider particle diameter. When the carbonaceous material containing a large amount of fine particles is used as a negative electrode for non-aqueous electrolyte secondary batteries, the irreversible capacity is increased and the charge-discharge efficiency is reduced. When the carbonaceous material containing a large amount of particles having a wider particle diameter is used as a negative electrode for non-aqueous electrolyte secondary batteries, a smoothness of the negative electrode is lacking, and thus it is difficult to reduce the thickness of the negative electrode. The negative electrode's resistance can become low by reducing the thickness of a negative electrode for non-aqueous electrolyte secondary batteries. As a result, the non-aqueous electrolyte secondary battery capable of being charged rapidly and having a high rate performance can be manufactured.

A value obtained by the formula $D_{90}/D_{50}$ of the carbonaceous material of the present invention is not particularly limited, but preferably 1.46 or less, more preferably 1.45 or less, further preferably 1.44 or less, most preferably 1.40 or less. When the value obtained by the formula $D_{90}/D_{50}$ is 1.46 or less, the carbonaceous material does not contain particles having a wider particle diameter. Thus, the thickness of the negative electrode can be preferably reduced. In addition, a value obtained by the formula $D_{10}/D_{50}$ of the carbonaceous material of the present invention is not particularly limited, but preferably 0.39 or more, more preferably 0.40 or more, further preferably 0.42 or more, most preferably 0.45 or more. When the value obtained by the formula $D_{10}/D_{50}$ is 0.39 or more, the fine particles are contained in the carbonaceous material. Thus, an increase of irreversible capacity and a reduction of charge-discharge efficiency of the battery can be suppressed.

A range of particle diameters of the carbonaceous material of the present invention is not limited. However, an upper limit of particle diameter is three times the $D_{50}$, that is, the carbonaceous material does not substantially contain a particle having a particle size of more than three times the $D_{50}$. Further, a lower limit of particle diameter is one-tenth of $D_{50}$, that is, the carbonaceous material does not substantially contain a particle having a particle size of less than one-tenth of $D_{50}$. The wording "the carbonaceous material does not substantially contain a particle having a particle size of more than three times the $D_{50}$" as used herein means that the amount of the particles having a particle size of more than three times the $D_{50}$ is less than 0.5 % by volume. The wording "the carbonaceous material does not substantially contain a particle having a particle size of less than one-tenth of $D_{50}$" as used herein means that the amount of the particles having a particle size of more than one-tenth of $D_{50}$ is less than 0.5% by volume.

A circularity of the carbonaceous material of the present invention is not limited, but 0.925 or more, more preferably 0.930 or more. The carbonaceous material having the circularity of 0.925 or more can be obtained by use of the jet mill machine. When the carbonaceous material having circularity of 0.925 or more is used as a negative electrode for non-aqueous electrolyte secondary batteries, an amount of the carbonaceous material packed into a negative electrode can be increased. Thus, the battery performance can be enhanced.

The circularity may be calculated from projected images of particles onto a two-dimensional surface. In particular, a suspension containing particles is aspirated into a measurement device, and a sample flow is made. A stroboscopic light source is exposed to the sample flow, and the particles passing through the cell are photographed as a still image by a CCD camera with an objective lens. The images of particles in the still image are analyzed, and circularities thereof are calculated. The particle circularity means a value obtained by dividing the circumference of a circle having the same projected area as the particle image by the circumference of the particle image. For example, the particle circularities of a regular hexagon, a regular pentagon, a regular tetragon and a regular triangle are 0.952, 0.930, 0.886, and 0.777 respectively. It is known that, in a measurement of amorphous particle circularity, a value of particle circularity does not vary by a difference of analyzer, so long as the commercial available particle image analyzer is used. As for the particle image analyzer, for example, the flow type particle image analyzer FPIA-3000 manufactured by Sysmex can be used.

A carbon source of the carbonaceous material of the present invention is not particularly limited, for example, there may be mentioned a petroleum pitch, a coal pitch, an aldehyde resin (such as a phenol resin, a melamine resin, a ketone resin, an amino resin, and an amide resin), or thermosetting resin (such as an epoxy resin, a urethane resin, an urea resin, a diallyl phthalate resin, a polyester resin, a polycarbonate resin, a silicon resin, a polyacetal resin, and a nylon resin). However, the petroleum pitch and the coal pitch are preferable, the petroleum pitch being more preferable. The impurities contained in the petroleum pitch are low, and thus a yield of the carbonaceous material is high.

Method for preparing the carbonaceous material for a negative electrode of non-aqueous electrolyte secondary batteries

A method for preparing a carbonaceous material for a negative electrode of non-aqueous electrolyte secondary batteries, comprises the steps of: (1) preliminarily calcining a carbon source at 610°C or less to obtain a carbon precursor, (2) pulverizing the carbon precursor by a jet mill to obtain a pulverized carbon precursor, (3) mainly calcining the fine particles of the pulverized carbon precursor at 800°C or more to obtain the carbonaceous material.

The preparation method of the present invention is one for obtaining a non-graphitizable carbon material. For example, when the petroleum pitch, or the coal pitch, is used as a carbon source, the preparation method of the present invention comprises a step of oxidizing the petroleum pitch or the coal pitch at 50 to 400°C, preferably 120 to 300°C. However, when an aldehyde resin, a cellulose, a coconut char a charcoal, or a thermosetting resin is used as a carbon source, the oxidizing step is not essential.

The carbonaceous material for a negative electrode of non-aqueous electrolyte secondary batteries of the present invention can be manufactured through the preparation method of the carbonaceous material for a negative electrode of non-aqueous electrolyte secondary batteries of the present invention. However, the carbonaceous material for a negative electrode of non-aqueous electrolyte secondary batteries of the present invention is not manufactured only by said method of the present invention. That is, the carbonaceous material for a negative electrode of non-aqueous electrolyte secondary batteries of the present invention can be manufactured by a preparation method different from that of the present invention.

«Oxidizing step»

The oxidizing step of the petroleum pitch or the coal pitch is not particularly limited, so long as a porous pitch such as a petroleum pitch or the coal pitch is cross-linked, but, for example, the oxidizing step can be carried out using an oxidizing agent. The oxidizing agent is not particularly limited, but a gas wherein $O_2$, $O_3$, or $NO_2$ is diluted by air, a nitrogen gas, or the like, or a mixed gas thereof, or oxidizing gas such as air may be used as a gas. As a liquid, an oxidizing liquid such as a sulfuric acid, nitric acid, or hydrogen peroxide, or mixture thereof, may be used.

An oxidizing temperature is not limited, but, for example, 50 to 400°C, preferably 100 to 400°C, more preferably 120 to 300°C or 150~350°C, further preferably 150 to 300°C, most preferably 200 to 300°C.

<<Pre-calcination step>>

In the pre-calcination step of the preparation method of the present invention, the carbon source is calcined at 610°C or less to thereby obtain the carbon precursor. Volatile portions, such as $CO_2$, $CO$, $CH_4$, or $H_2$, and tar, are removed by the pre-calcination. Therefore, a volatilization thereof in the main-calcination step can be reduced, and thus the firing furnace load can be reduced.

The pre-calcination temperature of a carbon source is 610°C or less, preferably 600°C or less, more preferably 595°C or less, further preferably 590°C or less, most preferably 585°C or less. A lower limit of the pre-calcination temperature is not particularly limited, but 350°C or more, preferably 400°C or more. The pre-calcination can be carried out according to a conventional procedure of pre-calcination, except for the pre-calcination temperature of 610°C or less. Specifically, the pre-calcination is performed in an inert gas atmosphere. For the inert gas, there may be mentioned nitrogen, argon and the like. Further, the pre-calcination can be carried out under a reduced pressure, for example, 10KPa or less. A pre-calcination time is not particularly limited. However, for example, the pre-calcination can be carried out for 0.5 to 10 hours, preferably 1 to 5 hours.

In the preparation method of the present invention, the hardness of the obtained carbon precursor can be reduced by calcining the carbon source at 610°C or less. Further, in the pulverizing step using jet mill, the contamination by metallic pieces removed from the inside wall of the jet mill machine may be prevented. When the carbon source is calcined at a temperature of 610°C or more, the hardness of the carbon precursor becomes too high. Thus, in the pulverizing step, metallic pieces of the inside wall of the jet mill machine are removed by the carbon precursor, and the resulting non-graphitizable carbon material is thereby contaminated by the metallic pieces. The contamination of the non-graphitizable carbon material leads to the decrease of discharge capacity and the increase of irreversible capacity in the non-aqueous electrolyte secondary battery using non-graphitizable carbon material. Thus, the charge-discharge efficiency of the battery is reduced.

«Pulverizing step »

In order to equalize the particle diameter of the carbonaceous material for a negative electrode of non-aqueous electrolyte secondary batteries, the pulverizing step is carried out. In the pulverizing step of the preparation method of the present invention, the jet mill is used. A pulverization pressure of the jet mill is not particularly limited. However, for example, the pulverization is carried out at a pulverization pressure of 3.0 to 3.5kgf/cm$^2$. A pulverization time is appropriately determined in accordance with the amount of a charged carbon precursor, and/or a rotation number of a rotor, etc. and therefore, it is not particularly limited. However, for example, the pulverization can be carried out for 30 minutes to 2 hours.

Further, it is preferable that the jet mill used in the pulverizing step has a classifier. This is because the special fine powders are removed by classification, so that the value of $(D_{90}-D_{10})/D_{50}$ becomes sharp.

The carbonaceous material for a negative electrode of non-aqueous electrolyte secondary batteries having a sharp range of particle size distribution can be obtained through use of the jet mill in the pulverizing step in the present invention. In particular, the value of $(D_{90}-D_{10})/D_{50}$ is 1.05 or less. As shown in Figure 1(A), the carbonaceous material of non-graphitizable carbon material pulverized by the jet mill exhibits a sharp range of particle size distribution. In contrast, a carbonaceous material of non-graphitizable carbon material pulverized by the vibratory ball mill exhibits a wide range of particle size distribution, as shown in Figure 1(B). That is, the carbonaceous material obtained by the vibratory ball mill contains fine powders having a diameter of about $0.3\mu m$, and particles having a diameter of $30\mu m$ or more.

Further, edges of the obtained carbonaceous materials are chipped off using the jet mill in the pulverizing step in the present invention. That is, angles of the obtained carbonaceous materials are rounded, and thus the circularity thereof is increased. Compared to the jet mill, when a method using a ball mill, a rod mill, an atomizer mill, or the like, which pulverizes the subjects mechanically, is used, the edges of the carbonaceous materials are easily formed and thus the circularity thereof is reduced. The carbonaceous material having, high circularity, is used as the negative electrode for non-aqueous electrolyte secondary batteries, an amount of the carbonaceous material packed into the negative electrode can be increased, and thus, the charge-discharge capacity per unit volume can be enhanced.

Further, when the carbon precursor is pulverized by use of a ball mill, a rod mill, or the like, which pulverizes the subjects mechanically, the fine powder having a diameter of about $0.4\mu m$ cannot be removed, even in using the classifier, as shown in Figure 1(B). In the pulverizing step in the present invention, the development of fine carbonaceous particles can be almost completely suppressed. When the carbonaceous material containing a large number of fine powders is used as the negative electrode for non-aqueous electrolyte secondary batteries, the irreversible capacity is increased and the charge-discharge efficiency is reduced, which is not preferable.

An average particle diameter of the pulverized carbon precursor obtained in the pulverizing step is preferably 5 to 30pm, more preferably 5 to $27.5\mu m$. The pulverized carbon precursor is calcined by the main calcination step, and contracts at a rate of about 0 to 20 percent according to a main calcination condition. Therefore, in order to obtain the carbonaceous material for a negative electrode of non-aqueous electrolyte secondary batteries having an average particle diameter ($D_{50}$) of 5 to $25\mu m$, it is preferable that the average particle diameter of the pulverized carbon precursor is adjusted to 5 to $30\mu m$.

«Main calcination step»

The main calcination step in the preparation method of the present invention can be carried out according to a conventional procedure of main calcination, and the carbonaceous material for a negative electrode of non-aqueous electrolyte secondary batteries can be obtained through an implementation of the main calcination.

Specifically, a temperature for calcining the pulverized carbon precursor is 800 to 1400°C, preferably 900 to 1350°C, more preferably 1000 to 1350°C. The main calcination is performed in an inert gas atmosphere. For the inert gas, there may be mentioned nitrogen, argon and the like. Further, the main calcination can also be carried out under an inert gas containing halogen gas. Furthermore, the main calcination can be carried out under a reduced pressure, for example, 10KPa or less. A main calcination time is not particularly limited. However, for example, the main calcination can be carried out for 0.1 to 10 hours, preferably 0.3 to 8 hours, more preferably 0.4 to 6 hours.

«Preparation from petroleum pitch or coal pitch»

When the petroleum pitch or coal pitch is used as a carbon source in the preparation method for the carbonaceous material of the present invention, porous pitch products are prepared, and the resulting products are used in the oxidizing step. The preparation method of the porous pitch products is not particularly limited. However, for example, the porous pitch products can be prepared in the following ways. That is, the petroleum pitch or coal pitch is mixed while heating with an additive comprising an aromatic compound having a boiling point of 200°C or more and having generally two to three rings or a mixture thereof to form a pitch product. Then, the additive is removed from the pitch product by extraction with a solvent having a low dissolving power for the pitch and a high dissolving power for the additive in order to form a porous pitch.

The mixing of the pitch and the additive may suitably be performed in a molten state while heating in order to achieve uniform mixing. The resultant mixture of the pitch and additive may be preferably shaped into particles having a diameter of 1 mm or less so as to facilitate the extraction of the additive from the mixture. The shaping may be performed in a molten state or by pulverization of the mixture after cooling. Suitable examples of the solvent for removal by extraction of the additive from the mixture of the pitch and the additive may include: aliphatic hydrocarbons, such as butane, pentane, hexane or heptane; mixtures principally comprising aliphatic hydrocarbons, such as naphtha or kerosene; and aliphatic alcohols, such as methanol, ethanol, propanol or butanol. By extracting the additive from the shaped mixture product with such a solvent, it is possible to remove the additive from the shaped product while retaining the shape of the product. At this time, it is assumed that holes are formed at parts from which the additive is removed, thereby providing a uniformly porous pitch product.

The resulting porous pitch product is oxidized according to the above oxidizing step. In particular, it is convenient and also economically advantageous to affect the crosslinking by oxidation at 50 to 400°C, preferably 120 to 300°C while using an oxide-containing gas, such as air or a mixture of air with another gas such as a combustion gas, as the oxidizing agent. In this case, using a pitch having a softening point of 150°C or more is preferred, since a low-softening point pitch is liable to melt during oxidation, thus rendering the oxidation difficult.

The carbon precursor, cross-linked by the oxidizing step, is subjected to the pre-calcination step, the pulverizing step, and the main calcination step so as to obtain the carbonaceous material for a negative electrode of non-aqueous electrolyte secondary batteries. For example, the cross-linked carbon precursor is heated at 400°C to 600°C under an $N_2$ atmosphere, and then pulverized by the jet mill (AIR JET MILL, MODEL 100AFG; Hosokawa Micron Corporation). Subsequently, the carbon precursor is carbonated at 800 to 1400°C, preferably 900 to 1350°C, more preferably 1000 to 1350°C. The carbonaceous material of the present invention can be obtained by the above procedures.

«Manufacture of negative electrode for non-aqueous electrolyte secondary batteries»

The obtained carbonaceous material can be used as the negative electrode for non-aqueous electrolyte secondary batteries. An example of the method for preparing the non-aqueous electrolyte secondary battery is described below.

The obtained carbonaceous material may, for example, be used for production of electrodes, as is, or together with an electroconductive aid comprising, e.g., electroconductive carbon black or acetylene black in an amount of 1 to 10% by weight. A binder and an appropriate amount of solvent added thereto, followed by kneading to form a pasty electrode-forming composition. Then, the pasty electrode-forming composition is applied to an electroconductive substrate comprising, e.g., a circular or rectangular metal plate, dried and press-formed. A formed layer having a thickness of 10 to 200μm is used as a negative electrode in the electrode preparation. The binder is not particularly limited so long as it is not reactable with an electrolytic solution and includes polyvinylide fluoride, polytetrafluorethylene, styrene butadiene rubber (SBR), and the like. In the case of polyvinylidene fluoride, a solution thereof in a polar solvent, such as N-methylpyrolidone (NMP), may preferably be used, whereas it is also possible to use an aqueous emulsion of SBR, or the like. The binder may be preferably added in an amount of 0.5 to 10 parts by weight per 100 parts by weight of the carbonaceous material of the present invention. Too large of an additional amount of the binder is not preferred because it results in an increase in electrical resistance of the resultant electrode leading to an increased inner resistance of the battery and lower battery performances. On the other hand, too small of an additional amount of the binder results in insufficient bonding of the spherical carbonaceous material particles with one another and with the electroconductive substrate.

In the case of forming a negative electrode of a non-aqueous electrolyte secondary battery using the negative electrode material of the present invention, other components of the battery, such as a positive electrode material, a separator and an electrolytic solution, are not particularly limited, and various materials conventionally used in or proposed to be used for non-aqueous electrolyte secondary batteries can be used. For example, the positive electrode material preferably includes a complex metal chalcogenide, such as $LiCoO_2$, $LiNiO_2$ $LiMnO_2$, or $LiMn_2O_4$, and may be formed together with an appropriate binder and an electroconductivity-imparting carbonaceous material into a layer on an electroconductive substrate.

A non-aqueous solvent-type electrolytic solution used in combination with such a positive electrode and a negative electrode may generally be prepared by dissolving an electrolyte in a non-aqueous solvent. As the non-aqueous solvent, it is possible to use one, or two or more combinations of the organic solvents selected from the group of propylene carbonate, ethylene carbonate, dimethyl carbonate, diethyl carbonate, dimethoxyethane, diethoxyethane, $\gamma$-butyrolactone, tetrahydrofuran, 2-methyltetrahydrofuran, sulfolane, 1,3-dioxolane, and the like. Further, as for the electrolyte, it is possible to use $LiClO_4$, $LiPF_6$, $LiBF_4$, $LiCF_3SO_3$, $LiAsF_6$, LiCl, LiBr, $LiB(C_6H_5)_4$, $LiN(SO_3CF_3)_2$, or the like. A secondary battery may generally be formed by oppositely disposing a positive electrode layer and a negative electrode layer prepared in the above-described manner (optionally) by the medium of a liquid-permeating separator comprising non-woven cloth, another porous material, etc., and immersing them in an electrolytic solution. As a separator, a liquid-permeable separator made of a non-woven fabric or other porous material, usually used in secondary batteries, can be used. Alternatively, in place of the separator, or together with the separator, a solid electrolyte made of a polymer gel in which an electrolytic solution is immersed, can also be used.

EXAMPLES

The present invention will now be further illustrated by, but is by no means limited to, the following Examples

The measurement methods of physical properties of the carbonaceous material for a negative electrode of non-aqueous electrolyte secondary batteries of the present invention are described below. Values of physical properties described in the present specification, including Examples, are obtained according to the following methods.

«XRD measurement»

(d002 of a carbonaceous material)

A powdery sample of carbonaceous material was packed in a sample holder and irradiated with a monochromatic $CuK\alpha$ ray through a Ni filter to obtain an X-ray diffraction pattern. The peak position of the diffraction pattern was determined by the center of gravity method (i.e., a method wherein the position of gravity's center of diffraction lines is obtained to determine a peak position as a $2\theta$-value corresponding to the gravity center) and calibrated by the diffraction peak of a (111) plane of high-purity silicon powder as the standard substance. The d002 value was calculated by the following Bragg's formula with the wavelength of the $CuK\alpha$ ray as 0.15418 nm.

$$d_{002} = \lambda / (2\sin\theta)$$

«Specific surface area »

(Specific surface area by nitrogen adsorption)

An approximate equation: vm= 1/(v (1-x)) derived from the BET equation was used to obtain vm at the liquid nitrogen temperature according to the BET single point method (at a relative pressure x (= 0.3)) using nitrogen adsorption, and a specific surface area of the sample was calculated based on the following equation:

$$\text{Specific surface area} = 4.35 \times Vm \, (m^2/g)$$

wherein vm denotes an amount of adsorption ($cm^3/g$) required to form a mono-molecular layer, v denotes an actually measured amount of adsorption (cm<3> /g), and x denotes a relative pressure. More specifically, an amount of adsorbed nitrogen on a carbonaceous material at the liquid nitrogen temperature was measured in the following manner by using "Flow Sorb II 2300" made by MICROMERITICS Instrument Corp.

A carbonaceous material was packed in a sample tube, and the sample tube was cooled to -196°C with a flow of helium gas containing nitrogen at a concentration of 30mol%, thereby causing the carbonaceous material to adsorb nitrogen. Then, the sample tube was restored to room temperature to measure the amount of nitrogen desorbed from the sample by a thermal conductivity-type detector, thereby obtaining the adsorbed amount of the gas v.

«Differential Thermal Analysis»

Differential thermal analysis was carried out using DTG-50 manufactured by Shimadzu Corporation under dry air flow conditions. The analysis conditions were: 2 mg of a sample; under an air flow of 100 ml/min; and at a rate of an elevating temperature of 10°C/min. The exothermic peak temperature was read from the differential thermal curve.

«Measurement of particle size distribution»

A dispersant (cationic surfactant "SN wet 366" (San Nopco Limited)) was added to a sample, and blended well with the sample. Then, pure water was added thereto and dispersed by an ultrasonic washer, and thereafter the particle size distribution within the particle size range of 0.5 to 3000$\mu$m was determined using a particle size distribution analyzer (Shimadzu Corporation, "SALD-3000S"). Cumulative (integrated) volume of particles $D_{90}(\mu m)$, $D_{50}(\mu m)$, and $D_{10}(\mu m)$ :

From the particle size distribution, the particle size at which the cumulative volume was 90%, 50% and 10% were determined as the cumulative (integrated) volume of particles $D_{90}$, $D_{50}$, and $D_{10}$, respectively.

«Softening Point»

A softening point of the petroleum pitch, a carbon source, is measured according to the following method. A "Koka" type flow tester manufactured by Shimadzu Corporation is used. 1 g of the sample pulverized to a size of 250 $\mu$m or less was charged in a cylinder with a cross-sectional area of 1 cm$^2$ having a nozzle with a diameter of 1 mm at the bottom thereof. The temperature was elevated at a rate of 6 °C /min while applying a load of 9.8 N/cm$^2$ (10 kg/ cm$^2$). The powder particles were softened and the filling rate was increased, so that the volume of the sample powder decreased. However, the decrease of the volume was stopped at a certain temperature. The temperature was further elevated, and the melted sample was allowed to flow out from the nozzle at the bottom of the cylinder. The temperature at which the decrease in volume of the sample powder was stopped was defined as the softening point of the sample.

«Circularity»

The measurement of circularity is carried out using the flow type particle image analyzer FPIA-3000 manufactured by Sysmex. A particle-containing suspension was aspirated into a measurement device. A stroboscopic light source was exposed to the sample flow, and then the particles passing through the cell are photographed as a still image by a CCD camera with an objective lens. The particle images in the still image are analyzed, and circularity thereof was calculated. The particle circularity means a value obtained by dividing the circumference of a circle having the same projected area as the particle image by the circumference of the particle image.

«Example 1»

70 kg of a petroleum pitch having a softening point of 205 °C and an H/C atomic ratio of 0.65, and 30 kg of naphthalene, were charged in a 300 liter, pressure-resistant vessel equipped with stirring blades and an outlet nozzle. The mixture was melt-mixed through heating at 190°C, and then cooled to 80 to 90°C. Subsequently, the mixture was extruded from the outlet nozzle by pressurizing the inside of the pressure-resistant vessel with nitrogen gas to form a string-shaped product having a diameter of about 500 $\mu$m. Then, the string-shaped product was broken so as to provide a diameter-to-length ratio of about 1.5. The resulting broken product was added into an aqueous solution containing 0.53 % by mass of polyvinyl alcohol (saponification degree = 88%) and heated to 93 °C, followed by stirring for dispersion and cooling to form a slurry of pitch spheres. After removing a major part of water by filtration, the pitch spheres were subjected to extraction with about 6 times by weight of n-hexane to remove the naphthalene in the pitch spheres. The resulting porous spherical pitch was heated to 270 °C in a fluidized bed while passing heated air and held at 270°C for 1 hour. The porous spherical pitch was oxidized to obtain a thermally-infusible porous spherical oxidized pitch.

Then, 100g of the oxidized pitch was charged into a vertical tubular furnace having an inner diameter of 50mm and a height of 900mm, heated to 550°C while passing a nitrogen gas at a flow rate of 5NL/min from the bottom thereof, and preliminarily calcined by maintaining at 550°C for 1 hour to obtain a carbon precursor. 70g of the resulting carbon precursor was pulverized by the jet mill (AIR JET MILL, MODEL 100AFG; Hosokawa Micron Corporation) at a pulverization pressure of 3.0kgf/cm$^2$ and 6800rpm of a rotation number for 1 hour, to obtain a pulverized carbon precursor having an average diameter of about 10$\mu$m. In connection to this, the jet mill equipped with a classifier was used. Then, 10g of the pulverized carbon precursor was charged into a horizontal, tubular furnace having a diameter of 100mm, heated to 1200°C at an elevating temperature rate of 250°C/h, and mainly calcined by maintaining 1200°C for 1 hour to prepare carbonaceous material 1. The main calcination carried out under a nitrogen atmosphere at a flow rate of 10L/min.

A particle size distribution of the resulting carbonaceous material 1 is shown in Figure 1. Compared to the comparative carbonaceous material 3, which was pulverized by the vibratory ball mill described in Comparative Example 3, when the carbon precursor was pulverized by the jet mill, the development of the fine powder having a diameter of about 0.4$\mu$m was prevented. Further, the carbonaceous material 1 had a narrow particle size distribution, and the amount of the particles having a diameter of more than 27.6$\mu$m which is three times $D_{50}$, was 1.3% or less.

«Example 2»

The procedure described in Example 1 was repeated, except that the pre-calcination temperature was changed from 550 °C to 500°C, to prepare carbonaceous material 2.

«Example 3»

The procedure described in Example 1 was repeated, except that the pre-calcination temperature was changed from 550 °C to 600°C, to prepare carbonaceous material 3.

«Example 4»

The procedure described in Example 1 was repeated, except that the pre-calcination temperature was changed from 550 °C to 600°C, and the rotation number was changed 6800rpm to 4000rpm, to prepare carbonaceous material 4.

«Example 5»

The procedure described in Example 1 was repeated, except that the pre-calcination temperature was changed from 550 °C to 580°C, to prepare carbonaceous material 5.

<<Comparative Example 1>>

The procedure described in Example 1 was repeated, except that the pre-calcination temperature was changed from 550 °C to 620°C, to prepare comparative carbonaceous material 1.

«Comparative Example 2»

The procedure described in Example 1 was repeated, except that the pre-calcination temperature was changed from 550 °C to 800°C, to prepare comparative carbonaceous material 2.

«Comparative Example 3»

The procedure described in Example 3 was repeated, except that the vibratory ball mill was used instead of the jet mill to prepare comparative carbonaceous material 3. That is, the carbon precursor was pulverized by the vibratory ball mill, and classified by the classifier to thereby remove the fine powders.

A particle size distribution of the resulting comparative carbonaceous material 3 is shown in Figure 1. In the case that the carbon precursor was pulverized by the vibratory ball mill, the fine powder having a diameter of about 0.4$\mu$m was produced, even though the classification was carried out.

«Manufacturing Examples 1 to 5 and Comparative Manufacturing Examples 1 to 3 of cells to be measured»

The non-aqueous electrolyte secondary batteries are manufactured using the carbonaceous materials 1 to 5 and comparative carbonaceous materials 1 to 3 prepared in Examples 1 to 5 and Comparative Examples 1 to 3, as a negative electrode material, and the characteristics thereof are evaluated, as follows. The negative electrode materials of the present invention are suitable for negative electrodes of the non-aqueous electrolyte secondary batteries. However, in order to accurately evaluate a discharge capacity and an irreversible capacity of an active material of the batteries without being affected by variations in the performance of the counter electrode, lithium-ion secondary batteries were produced using lithium metal having stable properties as a counter electrode and the electrode materials prepared in the above Examples and Comparative Examples, and the characteristics thereof are evaluated.

The positive electrode (carbon electrode) was prepared as follows. To 90 parts by weight of the negative electrode material prepared in each Example or Comparative Example and 10 parts by weight of polyvinylidene fluoride, N-methyl-2-pyrrolidone was added to prepare a paste, and the paste was uniformly applied to a copper foil, followed by drying the paste. Then, the electrode in the form of a sheet was punched into a disk with a diameter of 15 mm, and the resulting disk was pressed to obtain the electrode. The weight of the carbonaceous material (negative electrode material) in the electrode was adjusted to 10 mg, and the press was conducted so as to make the filling rate of the carbonaceous material about 67%.

The preparation of a negative electrode (lithium electrode) was performed in a glove box under an Ar atmosphere. A disk of stainless steel netting having a diameter of 16 mm was spot-welded in advance to an outer lid of a 2016-size coin-shaped cell can, and a 0.8 mm-thick thin plate of lithium metal stamped into a disk with a diameter of 15 mm was press-bonded onto the disk of stainless steel netting to obtain an electrode.

The prepared positive and negative electrodes were used together with an electrolyte liquid comprising a mixture solvent of ethylene carbonate, dimethyl carbonate and ethyl methyl carbonate mixed in volume ratios of 1:2:2 and LiPF6 added thereto at a rate of 1 mol/liter. Then, a fine porous membrane made of borosilicate glass fiber was used as a separator and a polyethylene-made gasket was used, to thereby assemble a 2016-size coin-shaped, non-aqueous electrolyte lithium secondary battery in a glove box under an Ar atmosphere.

«Measurement of cell capacity»

Each of the lithium secondary batteries as above was subjected to a charge-discharge test by using a charge-discharge tester ("TOSCAT", manufactured by Toyo System K.K.). The charging and discharging were performed according to the constant current-constant voltage method. The "charging" is caused as a discharging reaction of the test cell but the reaction is caused by insertion of lithium into a carbon material and is therefore described herein as "charging" for convenience. On the other hand, the "discharging" is caused as a charging reaction of the test cell but is described herein as "discharging" for convenience, since it is caused by liberation of lithium from the carbonaceous material. Under the constant current-constant voltage conditions adopted herein, the charging was continued at a constant current density of 0.5 mA/ cm$^2$ until the cell voltage reached 0 V. Thereafter, charging was continued by continuously changing the current value so as to keep a constant voltage of 0 V until the current value reached 20$\mu$A. A value obtained by dividing the supplied electricity by the weight of the carbonaceous material in the electrode is defined as a charge capacity per unit weight of carbonaceous material (mAh/g) herein. After charging was complete, the cell circuit was opened for 30 minutes, thereafter the discharging was effected. The discharging was performed at a constant current density of 0.5 mA/cm$^2$ until the cell voltage reached 1.5 V. A value obtained by dividing the electricity discharged by the weight of the carbon material in the electrode is defined as a discharge capacity per unit weight of carbonaceous material (mAh/g). An irreversible capacity was calculated by the following formula:

```
Irreversible capacity = Charge capacity - Discharge capacity
Charge-discharge capacities and irreversible capacity for a
sample were determined by averages of measured values for a
measurement of 3 (n=3) performed by using test cells
prepared for a single sample.
```

Table 1

| | Heat treatment temperature | DTA temperature | Discharge capacity | Irreversible capacity | Efficiency | $D_{10}$ | $D_{50}$ | $D_{90}$ | $D_{90}$-$D_{10}$ | $(D_{90}$-$D_{10})$ /$D_{50}$ | $d_{002}$ | Circularity | Specific surface area |
|---|---|---|---|---|---|---|---|---|---|---|---|---|---|
| | [°C] | [°C] | [mAh/g] | | [%] | [$\mu$m] | [$\mu$m] | [$\mu$m] | [$\mu$m] | [-] | [Å] | [-] | [m²/g] |
| Example 1 | 550 | 632 | 463 | 68 | 87.2 | 4.7 | 9.22 | 12.4 | 7.7 | 0.83 | 3.84 | 0.942 | 5.2 |
| Example 2 | 500 | 640 | 467 | 67 | 87.5 | 4.7 | 8.7 | 11.7 | 7.0 | 0.80 | 3.85 | 0.942 | 4.8 |
| Example 3 | 600 | 625 | 452 | 67 | 87.1 | 4.6 | 9.22 | 12.4 | 7.8 | 0.84 | 3.83 | 0.941 | 6.11 |
| Example 4 | 600 | 633 | 458 | 60 | 88.5 | 8.5 | 16.1 | 22.0 | 13.5 | 0.83 | 3.83 | 0.941 | 3.1 |
| Example 5 | 580 | 635 | 460 | 67 | 87.3 | 4.6 | 9.33 | 12.7 | 8.1 | 0.87 | 3.84 | 0.940 | 5.0 |
| Comparative example 1 | 620 | 610 | 438 | 88 | 83.2 | 5.2 | 10.6 | 14.5 | 9.3 | 0.87 | 3.82 | 0.940 | 5.66 |
| Comparative example 2 | 800 | 572 | 420 | 101 | 80.6 | 4.1 | 9.2 | 12.7 | 8.66 | 0.93 | 3.73 | 0.936 | 13.3 |
| Comparative example 3 | 600 | 647 | 436 | 72 | 85.8 | 4.9 | 12.6 | 18.5 | 13.6 | 1.07 | 3.85 | 0.921 | 4.4 |

The values of $(D_{90}-D_{10})/D_{50}$ of the carbonaceous material of Examples 1 to 5 are 1.05 or less. That is, the carbonaceous material has a sharp (narrow) particle size distribution. On the other hand, the value of $(D_{90}-D_{10})/D_{50}$ of the carbonaceous material of Comparative Example 3 is 1.07. That is, the carbonaceous material has a wide particle size distribution. Particularly, in a diameter range of $D_{50}$ or more, the carbonaceous materials of Examples 1 to 5 have sharp particle size distribution.

Further, the lithium-ion secondary batteries manufactured using the carbonaceous materials of Examples 1 to 5, have a high discharge capacity and a low irreversible capacity, and thus exhibit an excellent charge-discharge efficiency of 87% or more. On the other hand, the carbonaceous materials of Comparative examples 1 and 2, which were pre-calcined at 620°C or more, have an exothermic peak at a temperature range of 620°C or less in differential thermal analysis. Therefore, it is presumed that the metal pieces (Fe) are mixed in the carbonaceous material, and thus the reduction of discharge capacity and the increase of irreversible capacity are observed.

INDUSTRIAL APPLICABILITY

When the carbonaceous material for non-aqueous electrolyte secondary batteries of the present invention is used as a negative electrode material of the non-aqueous electrolyte secondary battery (for example, a lithium-ion secondary battery), a non-aqueous electrolyte secondary battery having a high discharge capacity to charge capacity, a low irreversible capacity to charge capacity, and a high charge-discharge efficiency can be obtained. The non-aqueous electrolyte secondary battery using the carbonaceous material of the present invention has a high durability and high charge-discharge efficiency, and therefore, can be used in an automotive application such as hybrid-type electric vehicles (HEV) or electric vehicles.

Although the present invention has been described with reference to specific embodiments, various changes and modifications obvious to those skilled in the art are possible without departing from the scope of the appended claims.

**Claims**

1. A carbonaceous material for a negative electrode of non-aqueous electrolyte secondary batteries, **characterized in that** an average (002) interlayer spacing d002 determined by X-ray diffractometry is 0.365 to 0.400 nm, a specific surface area determined by a BET method is 1 to 7 $m^2/g$, an average diameter is 5 to 25$\mu$m, a value of $(D_{90}-D_{10})/D_{50}$ is 1.05 or less, and an exothermic peak does not emerge at a temperature range of 620°C or less in differential thermal analysis measured in an air atmosphere.

2. The carbonaceous material for negative electrode of non-aqueous electrolyte secondary batteries according to claim 1, wherein a circularity is 0.925 or more.

3. The carbonaceous material for a negative electrode of non-aqueous electrolyte secondary batteries according to claim 1 or 2, wherein a carbon source of the carbonaceous material is a petroleum pitch or a coal pitch.

4. A method for preparing a carbonaceous material for a negative electrode of non-aqueous electrolyte secondary batteries comprising the steps of:

   (1) preliminarily calcining a carbon source at 610°C or less to obtain a carbon precursor,
   (2) pulverizing the carbon precursor by a jet mill to obtain a pulverized carbon precursor, and
   (3) mainly calcining the fine particles of a pulverized carbon precursor at 800°C or more to obtain the carbonaceous material.

5. The method for preparing a carbonaceous material for a negative electrode of non-aqueous electrolyte secondary batteries according to claim 4, wherein the carbon source is a petroleum pitch or a coal pitch, and the method comprises a step of oxidizing the carbon source at 50 to 400°C under an oxidation gas atmosphere, before the preliminary calcination step.

Figure 1

**INTERNATIONAL SEARCH REPORT**

| International application No. |
|---|
| PCT/JP2012/056232 |

A. CLASSIFICATION OF SUBJECT MATTER
*H01M4/587*(2010.01)i, *C01B31/02*(2006.01)i

According to International Patent Classification (IPC) or to both national classification and IPC

B. FIELDS SEARCHED

Minimum documentation searched (classification system followed by classification symbols)
H01M4/587, C01B31/02

Documentation searched other than minimum documentation to the extent that such documents are included in the fields searched
Jitsuyo Shinan Koho          1922–1996   Jitsuyo Shinan Toroku Koho   1996–2012
Kokai Jitsuyo Shinan Koho    1971–2012   Toroku Jitsuyo Shinan Koho   1994–2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2006-252817 A  (Japan Energy Corp.),<br>21 September 2006 (21.09.2006),<br>paragraphs [0020] to [0040]<br>(Family: none) | 4<br>5<br>1-3 |
| X<br>Y<br>A | JP 2009-224323 A  (Nippon Steel Chemical Co.,<br>Ltd.),<br>01 October 2009 (01.10.2009),<br>paragraphs [0021], [0031] to [0034], [0054] to<br>[0075]<br>& WO 2009/104690 A1 | 4<br>5<br>1-3 |
| Y | JP 08-115723 A  (Kureha Chemical Industry Co.,<br>Ltd.),<br>07 May 1996 (07.05.1996),<br>paragraphs [0025] to [0030]<br>& US 5741472 A          & EP 700106 A2 | 5 |

| [X] Further documents are listed in the continuation of Box C. | [ ] See patent family annex. |
|---|---|

*    Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>08 May, 2012 (08.05.12) | Date of mailing of the international search report<br>22 May, 2012 (22.05.12) |
|---|---|
| Name and mailing address of the ISA/<br>   Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/056232

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2005/098998 A1  (Kureha Chemical Industry Co., Ltd.), 20 October 2005 (20.10.2005), entire text & US 2009/0140214 A1    & EP 1732153 A1 & CN 1938884 A | 1-5 |
| A | JP 2009-84099 A  (Sumitomo Bakelite Co., Ltd.), 23 April 2009 (23.04.2009), entire text (Family: none) | 1-5 |

Form PCT/ISA/210 (continuation of second sheet) (July 2009)

**REFERENCES CITED IN THE DESCRIPTION**

**Patent documents cited in the description**

- JP 8115723 A

- JP 2009840099 A